# NEW EUROPEAN PATENT SPECIFICATION

(11) **EP 2 414 253 B2**
(45) Date of publication and mention of the opposition decision: **13.03.2019**
(45) Mention of the grant of the patent: 08.06.2016
(21) Application number: 10759122.4
(22) Date of filing: 29.03.2010
(51) Int. Cl.: D21H 19/38, D21H 21/16

(54) **A PIGMENT COATED PAPERBOARD ADAPTED FOR STERILIZABLE PACKAGES**
FÜR STERILISIERTE VERPACKUNGEN ADAPTIERTER PIGMENTBESCHICHTETER KARTON
CARTON REVÊTU D'UN PIGMENT CONVENANT POUR DES CONDITIONNEMENTS STÉRILISABLES

(30) Priority: 03.04.2009 SE 0900437
(43) Date of publication of application: 08.02.2012
(73) Proprietor: BillerudKorsnäs Skog & Industri Aktiebolag, 80181 Gävle (SE)
(72) Inventor: LARSSON, Johan, S-805 98 Gävle (SE); AKSBERG, Rein, S-803 23 Gävle (SE); TUFVESSON, Helena, S-802 67 Gävle (SE)
(74) Representative: Kransell & Wennborg KB
(86) International application number: PCT/SE2010/050346
(87) International publication number: WO 2010/114467

(56) References cited:
- EP-A1- 1 138 825
- WO-A1-01/49938
- WO-A1-03/021040
- WO-A1-03/021040
- JP-A- 2004 017 984
- US-A- 4 517 285
- US-A1- 2002 014 318
- US-A1- 2004 106 716
- US-A1- 2005 032 644
- US-A1- 2007 148 377
- US-A1- 2008 241 483
- US-B2- 7 628 885
- US-B2- 7 976 904
- DATABASE WPI Week 200427, Derwent Publications Ltd., London, GB; AN 2004-286695, XP003027019 & JP 2004 017984 A (DAINIPPON PRINTING CO LTD) 22 January 2004
- KOGLER W. ET AL: 'Coating of paper and board' HANDBOOK OF PAPER AND BOARD 2006, WEINHEIM, pages 332 - 382, XP003027021
- BRISTOW A.J. ET AL: 'Bestrykning' PAPPERSTEKNIK December 1998, STOCKHOLM, pages 393 - 425, XP003027022
- DATABASE WPI Week 200624, Derwent Publications Ltd., London, GB; AN 2006-225317, XP003027020 & JP 2006 070268 A (SOMAR CORP) 16 March 2006
- "Chapters 6, 13 and 14 (partly)" In: "Pigment Coating and Surface Sizing of Paper", 2000, Fapet Oy, XP055363948, pages 95-103, 189-194,203,
- CHRISTOPHER J. BIERMANN: "Handbook of Pulping and Papermaking, Second Edition", 1996, Academic Press, XP055471989, pages 2pp, 139-140,
- "Differences paper and paperboard", Iggesund Paperboard Reference Manual, 2010, pages 22-25, XP055472103,
- CZECH et al.: "Thermal degradation of solvent-borne water soluble acrylic acid-butyl acrylate copolymers", Materials Science-Poland, vol. 27, no. 3, 2009, pages 851-856, XP055472108,

## Description

### Technical field of the invention

The present invention relates to a new quality of pigment coated board for packages with a top layer of bleached kraft pulp. The present invention also relates to a package comprising a pigment coated paperboard, and the use of a pigment coated paperboard for producing a package. The invention also relates to a method in a process for producing a paperboard.

The pigment coating layer is applied on top of the bleached layer of kraft pulp. The advantages of the new quality are a superior resistance towards water penetration in addition to a low surface roughness, good printability. The paperboard of the invention has a top surface that is suitable for printing in for example flexography, offset and lithography, and it is preferably used in the production of different kinds of packages, e.g. food packages. The paperboard is suitable for use in packaging processes where steam is used for sterilisation of the package and/or the food, e.g. co-sterilization of the package and its contents.

### Background of the invention

In the field of package production there is a demand for good printability of the paperboard. Good printing surfaces are normally created by pigment coating of the board surface. The paperboard for packages is usually a multiply paperboard with a bleached top layer under the pigment coating. The term pigment coating covers all types of coatings where pigments and binders are used together. The knowledge of preparing pigment based coatings is generally known to the person skilled in the art. However, pigment coated board is much more sensitive to water penetration, e.g. during and after sterilisation with steam, than uncoated board. Therefore, pigment coated board is not generally suitable for production of packages that will be sterilized with steam.

The printing surface, i.e the top layer of the board, is made from bleached cellulosic fibres or pigment coating. An improved top layer can be achieved if the board web is compressed in one or more roll nips, in most cases after the drying, in a calendering operation. An improved top layer can also be achieved by coating of the board with a coating colour, consisting of pigments and binders (pigment coating). Both the coating and the calendering operation may take place in-line in the same manufacturing process. In some applications of board for packaging of food it is a disadvantage to have a coating colour on the board surface, as the coating colour can reduce the hydrofobicity of the board. This is especially notable if steam is used for sterilisation of the board.

It is previously known from US 6,177,048 a process for packaging of wet food in packages made of laminated board, similar to the process of packaging food in tin cans. In this process the package and the food in it are sterilized together. Steam is used for the sterilization, similarly to the production of canned food. If there are cut board edges on the package, steam and water will penetrate into the board through the cut edges. As the diffusion of water vapour cannot be prevented, steam will penetrate into the board through the edges and condensate. As the fibre surfaces become wet due to the condensation of the water vapour they will loose their hydrophobic character and water penetration due to capillary forces will occur. When this happens, the board gets soaked with water in a relatively short time.

In the field of packaging of liquid and/or wet food the board is often laminated with polyethylene or other plastic materials. The board must resist different sterilisation treatments, e.g. sterilisation with hydrogen peroxide. Edge-wicking (edge-soaking) at the cut and uncovered board edges is a particularly difficult problem. Resistance against edge-wicking is normally created by the use of different sizing agents, such as AKD (alkyl ketene dimer), rosin size and ASA (alkenyl succinic anhydride). The sizing agents can be used one alone or in combinations with each other, the combination of AKD and rosin size, known as dual sizing, being the generally accepted combination for liquid packaging board. The sizing agents are retained (adsorbed) to the fibres during the paper making process and they spread over the fibre surfaces during the drying operation due to melting. Thereby the fibre surfaces will become hydrophobic and water penetration in the fibre structure of the board due to capillary forces is prevented. The general belief among scientists is that only a fraction of the fibre surfaces need to be covered in order to achieve a good hydrofobicity. Normally the AKD is based on stearic acid (C18) but palmitic acid (C16) or mixtures of C16 and C18 are also possible. However, according to accepted theory, the diffusion of water vapour into the board cannot be prevented by sizing.

It is well known [Roberts J. (1997): "A review of advances in internal sizing", Proc. The 11th Fundamental Research Symposium in Cambridge, pp 209 - 263] that maximum resistance against water penetration due to capillary forces is reached at relatively low addition levels of sizing agent, i.e. with 0,015 % (0,15 kg/ton) reacted AKD in the sheet. All the added AKD is not retained in the sheet and all the retained AKD will probably not react. Experience has shown that addition levels of 2 kg of AKD per ton of dry fibres give a sufficient margin in order to achieve the maximum hydrofobicity possible and necessary in the production of liquid packaging board. An addition of rosin size, between 0,5 and 1,5 kg/ton, is believed to improve the resistance against hydrogen peroxide, but it does not improve the hydrofobicity as such.

The pore structure is of great importance for water penetration into paper and board. The Washburn equation describes penetration of liquids into parallel capillaries, but it is also used to give an approximate description of water penetration into paper and board. In order to minimize water penetration according to the Washburn equation, the fibre surfaces should have as low surface energy as possible (i.e. maximum hydrofobicity) and the pore radii should be as small as possible. Small pores are created by relatively intensive beating of the fibres in refiners and/or by wet pressing of the wet board web with high pressure in the press section of the paper machine. When creating the small pores by beating and/or wet pressing, density of the board will increase. Therefore, high density of the paperboard reflects small pore sizes.

It would thus be desirable to be able to produce pigment coated paperboard for packages with superior resistance against water penetration enabling water vapour sterilization of the package. As good printability is important for high quality packages of today, it would also be desirable to be able to produce such a paperboard with a printing surface that is comparable to state of the art pigment coated board without compromising with other quality requirements of the product.

### Summary of the invention

The object of the present invention is to provide a pigment coated paperboard for packages with improved resistance against water penetration, in particular edge-wicking, especially if the board is treated with steam in a sterilisation process, and a top layer of bleached kraft pulp and with a good surface for printing without compromising with other quality requirements.

The object is achieved by means of an inventive combination and optimisation of features related to printability, optical properties before and after sterilization treatment, and resistance against negative effects from water and heat, by means of combining a certain paperboard and a certain pigment coating, which has previously not been done.

The object is achieved by a pigment coated paperboard, by a package comprising a pigment coated paperboard, by a use of a pigment coated paperboard, and by a method in a process for producing a paperboard, as defined in the independent claims.

Accordingly is defined a pigment coated paperboard adapted for sterilizable packages and comprising one or more layers, with a pigment coated top layer of bleached kraft pulp, wherein the paperboard has a density in the range of 700 to 870 kg/m<3> and is hydrophobic from a sizing agent treatment of each layer, wherein the pigment coating comprises a pigment, a binder, and a rheology modifier, and wherein the pigment comprises at least 50 weight % calcium carbonate, the binder comprises an acrylic co-polymer, and the rheology modifier comprises an acrylic co-polymer, and wherein the pigment coated top layer has a top surface forming a printing surface.

Each component of the pigment coated paperboard is carefully selected to meet the demands of retaining package integrity during and after a retort or co- sterilization process including stability against brightness reduction, stability against opacity reduction, resistance to thermal yellowing, resistance to thermal ageing, resistance to thermal accelerated ageing, resistance to internal cohesion ruptures and good adhesion to extruded polyolefins. A good adhesion to polyolefins is an advantage when the paperboard is to be provided with a coating of a polyolefin such as a polymer, which it usually is at a later stage in order to provide water resistance on the surface.

The pigment-coated paperboard for packages according to the invention is obtainable by a paper making process wherein an adequate amount of sizing agent, such as AKD, is used in the production of normal liquid packaging board. A relatively high density required is achieved by intensive beating and/or wet pressing. The possible problems with cracks caused by the high density may be avoided to some extent by treating the fibres in a HC refiner. The good printing surface, which is comparable to state of the art pigment coated surfaces, is obtained e.g. by selecting the optimal recipe of the pigment coating. According to the invention the amount of, or ratio of, clay and calcium carbonate must be optimized and the amount of, and type of binder must be optimized and the amount of, and type, of rheology modifier must be optimized. For pigment coating purposes the selection of pigments is among the groups of layered silicate mineral (e.g kaolinite, montmorillonite, smectite or illite) most common referred to as clay, hydrated magnesium silicate (e.g talc), calcium carbonate, titanium dioxide, satin white etc. Furthermore, the selection of binder and rheology modifier is important. Binders may be selected from the groups of styrene-butadiene latex, methyl methacrylate-butadiene latex, polyacrylate latex, styrene-acrylic latex or resin, poly vinyl acetate, polyvinyl alcohol, polysaccharides, starch, protein and combinations thereof. Rheology modifiers may be selected from the groups of polymers (e.g protein, polysaccarides, CMC (Carboxymethyl cellulose), HEC (Hydroxyethyl cellulose), ASE (Alkali soluble acrylic polymer emulsion), HASE (Hydrofobically modified alkaly soluble acrylic polymer emulsion), PU (Polyurethane), PvOH (Polyvinylalcohol), starch etc.)

The required hydrofobicity may be achieved by relatively high or considerably higher dosages of AKD-size than in the production of normal liquid packaging board, i.e. between 2 and 4 kg/ton dry fibres. A considerably higher density of the board, 700 to 870 kg/m³, a result of the desire to have smaller pores in the board than in normal liquid packaging board, is an important part of the concept for achievement of adequate or maximum hydrofobicity.

The pulp, all or a part of it, may be treated in a HC refiner in order to make the fibres more flexible and thereby providing a flexibility to the board, intended to reduce the possible problems with cracks that are caused by the high density of the board. HC refining is a common fibre treatment in the production of sack paper.

The good printing surface of the coating layer and its ability to withstand the retort process can be obtained by a new pigment coating composition that remains virtually unaffected by the steam sterilization process required for this application. Improved properties are obtained including but not limited to internal coating cohesion, adhesion to extruded polyolefins, optical properties, water resistance (in particular edge-wicking), creasing and folding. The excellent properties of the invention are to some extent not present for other pigment coatings based on e.g styrene-butadiene, starch or Poly vinyl alcohol binders, high content clay coatings or rheology modifiers based on natural proteins, polysaccarides or polyurethane where one or more of the properties needed for the invention, fail to perform. It should be understood that the pigment coating layer is related to the invention in combination with the layered paperboard construction as described. Persons skilled in the art understand that for example packaging material used for other applications may have similar pigment coating recipes, without appreciating the qualities for this specific application, i.e. autoclavable or co-sterilized packages.

In one embodiment the invention is directed to pigment coated paperboard for packages composed of one or more layers with a top layer of bleached kraft pulp having a surface roughness (PPS-10) of 1 - 5 µm measured according to ISO 8791-4.

In another embodiment of the invention the paperboard is a liquid packaging paperboard, and in another embodiment the sizing agent treatment of each layer involved the use of a dosage of sizing agent in the range of 2 and 4 kg/ton dry fibres. The sizing agent is preferably a commercially available AKD, such as C18-based AKD (alkyl ketene dimer).

The sizing agent may also be a combination of AKD and ASA (alkenyl succinic anhydride) in a total amount of 2 to 4 kg/ton dry fibres, and preferably between 3 and 4 kg/ton. When ASA is included, ASA should be at least 0,5 kg/ton, preferably between 0,5 and 2,0 kg/ton, and most preferably 0,6 and 1,0 kg/ton.

In yet another embodiment of the invention at least a portion of the fibres of the board has been treated with a HC (high consistency) refiner.

According to another embodiment of the invention, the top layer contains between 15 and 60 kg/ton titanium dioxide. This will result in improved optical properties.

In yet an embodiment, the pigment coating layer comprises a styrene-acrylic co-polymer binder in a weight percentage of 10-20 %, a layered silicate mineral clay and calcium carbonate pigment in a weight percentage of 80-90 %, and a rheology modifier in a weight percentage of 0,1-1%.

The pigment coating may further comprise a pigment chosen from the groups of layered silicate mineral, or hydrated magnesium silicate, or calcium carbonate, or titanium dioxide, or satin white, or combinations thereof, a binder selected from the groups of styrene-butadiene latex, methyl methacrylate-butadiene latex, polyacrylate latex, styrene-acrylic latex or resin, poly vinyl acetate, polyvinyl alcohol, polysaccharides, starch, protein or combinations thereof, and a rheology modifier selected from the group of polymers.

To continue, at least 80 % (weight) of the pigments may be calcium carbonate, and preferably between 95% and 100%.

Another aspect of the invention is directed to a package comprising a pigment-coated paperboard according to the invention.

The package is preferably adapted for pre- or post printing in for example flexography, offset and lithography.

A further aspect of the invention is directed to the use of a paperboard according to the invention for producing a package adapted for sterilization, and in particular co-sterilization of the package and its contents. The sterilization technique preferably comprises a step involving steam.

According to a further aspect of the present invention is defined a method in a process for producing a pigment coated paperboard adapted for sterilizable packages, comprising
- producing a paperboard comprising one or more layers, with a top layer of bleached kraft pulp, and the paperboard having a density in the range of 700 to 870 kg/m³ and each layer being treated with a sizing agent to make it hydrophobic.
- providing the top layer of the paperboard with a pigment coating comprising a pigment, a binder, and a rheology modifier, and wherein the pigment comprises at least 50 weight% calcium carbonate, the binder comprises an acrylic co-polymer, and the rheology modifier comprises an acrylic co-polymer, whereby the pigment coated top layer obtains a top surface forming a printing surface.

The method further comprises treating each layer with a sizing agent, such as C 18-based AKD (alkyl ketene dimer), involving the use of a dosage of sizing agent in the range of 2 to 4 kg/ton dry fibres.

According to another feature, the method comprises treating at least a portion of the fibres of the board with a HC (high consistency) refiner.

According to yet another feature, the method comprises applying to the top layer of the paperboard a pigment coating layer comprising a styrene-acrylic co-polymer binder in a percentage of 10-20 %, a layered silicate mineral clay and calcium carbonate pigment in a weight percentage of 80-90 %, and a small amount of rheology modifier in a weight percentage of 0, 1-1 %.

The method may also comprise further steps corresponding to the features of the inventive pigment coated paperboard.

The present invention offers advantages of stability against brightness reduction, stability against opacity reduction, resistance to thermal yellowing, resistance to thermal ageing, resistance to thermal accelerated ageing, resistance to internal cohesion ruptures and good adhesion to extruded polyolefins.

### Detailed description of the invention

The invention will now be illustrated by the description of embodiments, given as examples only, and it should be understood that these embodiments do not limit the scope of protection defined in the claims.

The pigment-coated paperboard of the invention may be produced as a two layer (duplex) board with a top layer of bleached sulphate (kraft) pulp, a mixture of 50 % softwood and 50 % (weight) hardwood pulp, and a bottom layer of bleached or unbleached softwood pulp. As alternatives for the bottom layer, it is possible to combine bleached/unbleached softwood pulp with bleached or unbleached hardwood pulp, or even use only bleached/unbleached hardwood pulp. A part of the softwood pulp, e.g. 50 % (weight), can be treated in a HC refiner in order to increase the flexibility of the fibres, which is believed to decrease the tendency for cracks in the converting of the board. The level of beating of all three pulps should be at least 21°SR

The bleached top layer contains titanium dioxide (TiO2) in a ratio of at least 15 kg/ton, preferably between 15 and 60 kg/ton, and most preferably between 20 and 30 kg/ton.

The dosage of sizing agent, in this case a C18-based AKD-size, should be at least 2 kg/ton, preferably between 2 kg/ton and 4 kg/ton, and most preferably between 3 kg/ton and 4 kg/ton, the higher limit being the upper limit accepted by the authorities for food packaging material. The AKD is added as a commercial dispersion to the furnish according to some generally accepted principle. pH in the furnish should preferably be higher than 6,5, preferably between 6,5 and 8,5, or even between 7,5 and 8,2, and most preferably between 7,1 and 8,0. A retention aid may be used, preferably cationic starch in combination with an anionic silica sol. Bicarbonate is known to improve AKD sizing and should therefore preferably be added. Small amounts of alum might also be added to the furnish.

It should be mentioned that naturally there is nothing that prevents that the paperboard may comprise more than two layers. Preferably each layer is treated with a sizing agent.

The printing surface of the board is achieved by pigment coating. The selection of pigment is preferably from the calcium carbonate family and the selection of binder is preferably from the acrylate homo- or co-polymer family. The weight percentage of pigment in the coating should at least be 80%, preferably between 80% and 90%, and most preferably between 84% and 88%. The weight percentage of binder is at least 10%, preferably between 10% and 20%, and most preferably between 12% and 16%. The rheology modifier is an ASE based on acrylic acid or a Steric Hindering, in solution or dispersion and in a percentage of at least 0,05%, preferably between 0,10% and 1,0%, and most preferably between 0,14% and 0,16%.

In an exemplifying embodiment of the invention, the pigment coating layer comprises a styrene-acrylic co-polymer binder in a weight percentage of 10-20 %, a layered silicate mineral and calcium carbonate pigment in a weight percentage of 80-90 % and a rheology modifier in a weight percentage of 0,1-1%.

The paperboard according to the invention has been produced at a paper machine four times, and the properties have been analyzed from the trials as presented below.

The optical properties as described mathematically according to CIELAB system; L*-value (lightness) of 92 - 95 and respective b*-value (blue or yellow shade; yellow when b*>0 and blue when b*<0) of 1,5 - 2,4 according to DIN 6174. When the paperboard is exposed to heat the optical properties will be changed and the paperboard will turn more yellow resulting in a higher b*-value. The difference between the b*-value measured according to DIN 6174 before and after treatment in an oven at 150 °C during one hour should not be more than 4.

| Trial 1 | Minimum | Maximum |
|---|---|---|
| Grammage (ISO 536:1995, g/m²) | 256 | 258 |
| Thickness (ISO 534:1988, µm) | 305 | 306 |
| Density (ISO 534:1988, kg/m³) | 839 | 846 |
| PPS10, top side (ISO 8791-4, µm) | 2,4 | 3,0 |
| Moisture content (ISO 287:1985, %) | 7,6 | 8,5 |
| L*-value (DIN 6174) | 94.1 | 94.1 |
| b*-value (DIN 6174) | 2.0 | 2.0 |
| Δb*-value¹⁾ | 1.8 | 2.2 |

| Trial 2: | Minimum | Maximum |
|---|---|---|
| Grammage (ISO 536:1995), g/m2 | 259 | 263 |
| Thickness (ISO 534: 1988), µm | 315 | 319 |
| Density (ISO 534: 1988), kg/m3 | 819 | 832 |
| PPS10, top side (ISO 8791-4), µm | 2.5 | 2.9 |
| Moisture content (ISO 287: 1985), % | 7.5 | 8.5 |
| L*-value (DIN 6174) | 93.4 | 93.7 |
| b*-value (DIN 6174) | 1.5 | 1.6 |
| Δb*-value¹⁾ | 3.0 | 3.2 |

| Trial 3: | Minimum | Maximum |
|---|---|---|
| Grammage (ISO 536:1995, g/m2 | 252 | 256 |
| Thickness (ISO 534: 1988, µm) | 314 | 320 |
| Density (ISO 534: 1988, kg/m3) | 796 | 816 |
| PPS10, top side (ISO 8791-4, µm) | 2.5 | 3.3 |
| Moisture content (ISO 287: 1985), % | 7.9 | 8.2 |
| L*-value (DIN 6174) | 92.9 | 93.7 |
| b*-value (DIN 6174) | 1.6 | 1.8 |
| Δb*-value¹⁾ | 2.3 | 2.6 |

| Trial 4: | Minimum | Maximum |
|---|---|---|
| Grammage (ISO 536:1995, g/m2 | 257 | 264 |
| Thickness (ISO 534: 1988, µm) | 315 | 328 |
| Density (ISO 534: 1988, kg/m3) | 795 | 817 |
| PPS10, top side (ISO 8791-4, µm) | 2.7 | 3.2 |
| Moisture content (ISO 287: 1985, %) | 7.6 | 8.3 |
| L*-value (DIN 6174) | 93.4 | 93.7 |
| b*-value (DIN 6174) | 1.5 | 1.7 |
| Δb*-value¹⁾ | 1.8 | 1.8 |
| 1) The difference between the b*-value before and after treatment in an oven at 150 °C during one hour. | | |

## Claims

1. A pigment coated paperboard adapted for sterilizable packages and comprising one or more layers, with a pigment coated top layer of bleached kraft pulp, wherein the paperboard has a density in the range of 700 to 870 kg/m³ and is hydrophobic from a sizing agent treatment of each layer, wherein the pigment coating comprises a pigment, a binder, and a rheology modifier, and wherein the pigment comprises at least 50 weight % calcium carbonate, the binder comprises an acrylic co-polymer, and the rheology modifier comprises an acrylic co-polymer, and wherein the pigment coated top layer has a top surface forming a printing surface.

2. A pigment coated paperboard according to claim 1, wherein the pigment coated top layer of bleached kraft pulp has a surface roughness (PPS-10) of 1 - 5 µm measured according to ISO 8791-4.

3. The pigment coated paperboard according to claim 1 or claim 2, wherein the paperboard is a liquid packaging paperboard.

4. The pigment coated paperboard according to any one of claims 1-3, wherein the sizing agent treatment of each layer involved the use of a dosage of sizing agent in the range of 2 to 4 kg/ton dry fibres.

5. The pigment coated paperboard according to claims 3-4, wherein the sizing agent is C18-based AKD (alkyl ketene dimer).

6. The pigment coated paperboard according to claims 3-4, wherein the sizing agent is a combination of AKD and ASA (alkenyl succinic anhydride) in a total amount of 2 to 4 kg/ton dry fibres.

7. The pigment coated paperboard according to any one of claims 1 -6, wherein at least a portion of the fibres of the board has been treated with a HC (high consistency) refiner.

8. The pigment coated paperboard according to any of the claim 1-7, wherein the top layer contains between 15 and 60 kg/ton titanium dioxide.

9. The pigment coated paperboard according to any one of claims 1-8, wherein the pigment coating layer comprises a styrene-acrylic co-polymer binder in a weight percentage of 10-20 %, a layered silicate mineral and calcium carbonate pigment in a weight percentage of 80-90 % and a rheology modifier in a weight percentage of 0,1-1% .

10. The pigment coated paperboard according to any one of claims 1-9, wherein at least 80 % of the pigments is calcium carbonate.

11. A package comprising a pigment coated paperboard according to any one of claims 1 - 10.

12. A package according to claim 11, **characterized in that** it is adapted for pre- or post printing in for example flexography, offset and lithography.

13. Use of a paperboard according to any one of claims 1-10 for producing a package adapted for sterilization.

14. Use of a paperboard according to any one of claims 1-10 for producing a package adapted for co-sterilization of the package and its contents.

15. Use according to claim 14, wherein the sterilization comprises a step involving steam.

16. A method in a process for producing a pigment coated paperboard adapted for sterilizable packages, comprising
- producing a paperboard comprising one or more layers, with a top layer of bleached kraft pulp, and the paperboard having a density in the range of 700 to 870 kg/m³ and each layer being treated with a sizing agent to make it hydrophobic,
- providing the top layer of the paperboard with a pigment coating comprising a pigment, a binder, and a rheology modifier, and wherein the pigment comprises at least 50 weight% calcium carbonate, the binder comprises an acrylic co-polymer, and the rheology modifier comprises an acrylic co-polymer, whereby the pigment coated top layer obtains a top surface forming a printing surface.

17. A method according to claim 16, comprising treating each layer with a sizing agent, such as C18-based AKD (alkyl ketene dimer), involving the use of a dosage of sizing agent in the range of 2 to 4 kg/ton dry fibres.

18. A method according to claim 16 or claim 17, comprising treating at least a portion of the fibres of the board with a HC (high consistency) refiner.

19. A method according to any one of claims 16-18, comprising applying to the top layer of the paperboard a pigment coating layer comprising a styrene-acrylic co-polymer binder in a weight percentage of 10-20 %, a layered silicate mineral and calcium carbonate pigment in a weight percentage of 80-90 % and a rheology modifier in a weight percentage of 0,1-1%.

## Patentansprüche

1. Für sterilisierte Verpackungen adaptierter pigmentbeschichteter Karton, der eine oder mehrere Schichten umfasst, mit einer pigmentbeschichteten Oberschicht aus gebleichtem Kraftzellstoff, wobei der Karton eine Dichte im Bereich von 700 bis 870 kg/m³ aufweist und aufgrund einer Behandlung jeder Schicht mit Schlichtemittel hydrophob ist, wobei die Pigmentbeschichtung ein Pigment, ein Bindemittel und einen Rheologiemodifikator umfasst, und wobei das Pigment mindestens 50 Gew.-% Calciumcarbonat umfasst, das Bindemittel ein Acrylcopolymer umfasst und der Rheologiemodifikator ein Acrylcopolymer umfasst, und wobei die pigmentbeschichtete Oberschicht eine Oberfläche aufweist, die eine Druckfläche bildet.

2. Pigmentbeschichteter Karton nach Anspruch 1, wobei die pigmentbeschichtete Oberschicht des gebleichten Kraftzellstoffs eine Oberflächenrauigkeit (PPS-10) von 1 - 5 µm gemessen gemäß ISO 8791-4 aufweist.

3. Pigmentbeschichteter Karton nach Anspruch 1 oder Anspruch 2, wobei es sich bei dem Karton um einen Karton zur Verpackung von Flüssigkeiten handelt.

4. Pigmentbeschichteter Karton nach einem der Ansprüche 1-3, wobei die Behandlung jeder Schicht mit Schlichtemittel die Verwendung einer Dosis von Schlichtemittel im Bereich von 2 bis 4 kg/Tonne Trockenfasern beinhaltet.

5. Pigmentbeschichteter Karton nach den Ansprüchen 3-4, wobei es sich bei dem Schlichtemittel um AKD (Alkylketendimer) auf C18-Basis handelt.

6. Pigmentbeschichteter Karton nach den Ansprüchen 3-4, wobei es sich bei dem Schlichtemittel um eine Kombination aus AKD und ASA (Alkenylbernsteinanhydrid) in einer Gesamtmenge von 2 bis 4 kg/Tonne Trockenfasern handelt.

7. Pigmentbeschichteter Karton nach einem der Ansprüche 1-6, wobei mindestens ein Teil der Fasern des Kartons mit einem Hochkonsistenz-Refiner (HC-Refiner) behandelt wurde.

8. Pigmentbeschichteter Karton nach einem der Ansprüche 1-7, wobei die Oberschicht zwischen 15 und 60 kg/Tonne Titandioxid enthält.

9. Pigmentbeschichteter Karton nach einem der Ansprüche 1-8, wobei die pigmentbeschichtete Schicht ein Styrol-Acryl-Copolymer-Bindemittel in einem Anteil von 10-20 Gew.-%, ein geschichtetes Silicatmineral und Calciumcarbonatpigment in einem Anteil von 80-90 Gew.-% und einen Rheologiemodifikator in einem Anteil von 0,1-1 Gew.-% umfasst.

10. Pigmentbeschichteter Karton nach einem der Ansprüche 1-9, wobei es sich bei mindestens 80% der Pigmente um Calciumcarbonat handelt.

11. Verpackung, die einen pigmentbeschichteten Karton nach einem der Ansprüche 1-10 umfasst.

12. Verpackung nach Anspruch 11, **dadurch gekennzeichnet, dass** sie für das Drucken im Voraus oder im Nachhinein zum Beispiel bei Flexodruck, Offsetdruck und Lithografie geeignet ist.

13. Verwendung eines Kartons nach einem der Ansprüche 1-10 zur Herstellung einer Verpackung, die zur Sterilisation geeignet ist.

14. Verwendung eines Kartons nach einem der Ansprüche 1-10 zur Herstellung einer Verpackung die zur gemeinsamen Sterilisierung der Verpackung und ihrer Inhalte geeignet ist.

15. Verwendung nach Anspruch 14, wobei die Sterilisierung einen Dampf beinhaltenden Schritt umfasst.

16. Verfahren in einem Prozess zur Herstellung eines pigmentbeschichteten Kartons, der für sterilisierbare Verpackungen geeignet ist, das Folgendes umfasst
- Herstellen eine Kartons, der eine oder mehrere Schichten umfasst, mit einer Oberschicht aus gebleichtem Kraftzellstoff, wobei der Karton eine Dichte im Bereich von 700 bis 870 kg/m³ aufweist und jede Schicht mit Schlichtemittel behandelt wird, um sie hydrophob zu machen,
- Versehen der Oberschicht des Kartons mit einer Pigmentbeschichtung, die ein Pigment, ein Bindemittel und einen Rheologiemodifikator umfasst, und wobei das Pigment mindestens 50 Gew.-% Calciumcarbonat umfasst, das Bindemittel ein Acrylcopolymer umfasst und der Rheologiemodifikator ein Acrylcopolymer umfasst, wobei die pigmentbeschichtete Oberschicht eine Oberfläche erhält, die eine Druckfläche bildet.

17. Verfahren nach Anspruch 16, das das Behandeln jeder Schicht mit einem Schlichtemittel, wie AKD (Alylketendimer) auf C18-Basis umfasst, was die Verwendung einer Dosis von Schlichtemittel im Bereich von 2 bis 4 kg/Tonne Trockenfasern beinhaltet.

18. Verfahren nach Anspruch 16 oder 17, das das Behandeln mindestens eines Teils der Fasern des Kartons mit einem Hochkonsistenz-Refiner (HC-Refiner) umfasst.

19. Verfahren nach einem der Ansprüche 16-18 das das Aufbringen einer Pigmentbeschichtungsschicht, die ein Styrol-Acryl-Copolymer-Bindemittel in einem Anteil von 10-20 Gew.-%, ein geschichtetes Silicatmineral und Calciumcarbonatpigment in einem Anteil von 80-90 Gew.-% und einen Rheologiemodifikator in einem Anteil von 0,1-1 Gew.-% umfasst, auf die Oberschicht des Kartons umfasst.

## Revendications

1. Carton revêtu d'un pigment qui convient pour des conditionnements stérilisables et comprenant une ou plusieurs couches, avec une couche supérieure revêtue d'un pigment faite d'une pâte kraft blanchie, dans lequel le carton possède une densité comprise entre 700 et 870 kg/m³ et est hydrophobe grâce à un traitement avec un agent d'encollage de chaque couche, dans lequel le revêtement pigmenté comprend un pigment, un liant et un modificateur de rhéologie, et dans lequel le pigment comprend au moins 50% en poids de carbonate de calcium, le liant comprend un copolymère acrylique et le modificateur de rhéologie comprend un copolymère acrylique, et dans lequel la couche supérieure revêtue d'un pigment possède une surface supérieure formant une surface d'impression.

2. Carton revêtu d'un pigment selon la revendication 1, dans lequel la couche supérieure revêtue d'un pigment faite d'une pâte kraft blanchie possède une rugosité de surface (PPS-10) comprise entre 1 et 5 µm mesurée selon la norme ISO 8791-4.

3. Carton revêtu d'un pigment selon la revendication 1 ou la revendication 2, dans lequel le carton est un carton de conditionnement liquide.

4. Carton revêtu d'un pigment selon l'une quelconque des revendications 1 à 3, dans lequel traitement de chaque couche par l'agent d'encollage impliquait l'utilisation d'un dosage d'un agent d'encollage compris dans la gamme entre 2 et 4 kg/tonne de fibres sèches.

5. Carton revêtu d'un pigment selon l'une quelconque des revendications 3 et 4, dans lequel l'agent d'encollage est l'AKD (dimère alkylcétène) à base de C18.

6. Carton revêtu d'un pigment selon l'une quelconque des revendications 3 et 4, dans lequel l'agent d'encollage est une combinaison d'AKD et d'ASA (anhydride succinique d'alcènyle) dans une quantité totale comprise entre 2 et 4 kg/tonne de fibres sèches.

7. Carton revêtu d'un pigment selon l'une quelconque des revendications 1 à 6, dans lequel au moins une partie des fibres du carton a été traitée avec un raffineur HC (à haute consistance).

8. Carton revêtu d'un pigment selon l'une quelconque des revendications 1 à 7, dans lequel la couche supérieure contient entre 15 et 60 kg/tonne de dioxyde de titane.

9. Carton revêtu d'un pigment selon l'une quelconque des revendications 1 à 8, dans lequel la couche revêtue d'un pigment comprend un liant copolymérique de styrène-acrylique dans un pourcentage massique compris entre 10% et 20%, un pigment minéral de silicate stratifié et de carbonate de calcium dans un pourcentage massique compris entre 80% et 90% et un modificateur de rhéologie dans un pourcentage massique compris entre 0,1% et 1%.

10. Carton revêtu d'un pigment selon l'une quelconque des revendications 1 à 9, dans lequel au moins 80% des pigments est du carbonate de calcium.

11. Conditionnement comprenant un carton revêtu d'un pigment selon l'une quelconque des revendications 1 à 10.

12. Conditionnement selon la revendication 11, **caractérisé en ce qu'**il convient pour la pré- ou post-impression dans par exemple la flexographie, l'offset et la lithographie.

13. Utilisation d'un carton selon l'une quelconque des revendications 1 à 10 destiné à la production d'un conditionnement qui convient à la stérilisation.

14. Utilisation d'un carton selon l'une quelconque des revendications 1 à 10 destiné à la production d'un conditionnement qui convient à la co-stérilisation du conditionnement et de son contenu.

15. Utilisation selon la revendication 14, dans laquelle la stérilisation comprend une étape impliquant de la vapeur.

16. Procédé dans un processus pour la production d'un carton revêtu d'un pigment qui convient pour des conditionnements stérilisables, comprenant les étapes consistant à
- produire un carton comprenant une ou plusieurs couches, avec une couche supérieure faite d'une pâte kraft blanchie, et le carton possédant une densité comprise dans la gamme entre 700 et 870 kg/m³ et chaque couche étant traitée avec un agent d'encollage pour la rendre hydrophobe,
- fournir la couche supérieure du carton avec un revêtement pigmenté comprenant un pigment, un liant et un modificateur de rhéologie, et dans lequel le pigment comprend au moins 50% en poids de carbonate de calcium, le liant comprend un copolymère acrylique et le modificateur de rhéologie comprend un copolymère acrylique, selon lequel la couche supérieure revêtue d'un pigment obtient une surface supérieure formant une surface d'impression.

17. Procédé selon la revendication 16, consistant à traiter chaque couche avec un agent d'encollage, telle qu'AKD (dimère alkylcétène) à base de C18, impliquant l'utilisation d'un dosage d'un agent d'encollage compris dans la gamme entre 2 et 4 kg/tonne de fibres sèches.

18. Procédé selon la revendication 16 ou la revendication 17, consistant à traiter au moins une partie des fibres du carton avec un raffineur HC (à haute consistance).

19. Procédé selon l'une quelconque des revendications 16 à 18, consistant à appliquer à la couche supérieure du carton une couche revêtue d'un pigment comprenant un liant copolymérique de styrène-acrylique dans un pourcentage massique compris entre 10% et 20%, un pigment minéral de silicate stratifié et de carbonate de calcium dans un pourcentage massique compris entre 80% et 90% et un modificateur de rhéologie dans un pourcentage massique compris entre 0,1% et 1%.
